# EUROPEAN PATENT APPLICATION

(11) **EP 4 343 547 A1**
(43) Date of publication of application: **27.03.2024**
(21) Application number: 22202421.8
(22) Date of filing: 19.10.2022
(51) Int. Cl.: G06F 9/455

(54) **IMAGE ASSEMBLY**

(30) Priority: 21.09.2022 US 202217949546
(71) Applicant: NCR Voyix Corporation, Atlanta, GA 30308-1007 (US)
(72) Inventor: WATERMAN, Simon, Wells, BA5 1PF (GB)
(74) Representative: Secerna LLP

(57) **Abstract**

Methods, computing devices and computer programs are disclosed. A method comprises assembling an executable image file, for execution as a software container element, from a plurality of predefined modular image files, each predefined modular image file comprising at least one layer defining executable instructions.

## Description

### Field of the Invention

The present invention relates to methods and computing devices for assembling executable image files for execution as software containers. In particular, but not exclusively, the present invention relates to a methodology for assembling an executable image file dynamically and according to the needs of a specific self-service terminal or point of sale terminal. The executable image file is assembled from a plurality of predefined modular image files, each having specific layer(s) that represent the executable instructions needed to make up the overall executable image file.

### Background

It is known that self-service terminals (SSTs) and/or Point of Sale (POS) terminals are used from time to time in the retail industry. SSTs and POS terminals are typically used to enable a customer to conduct transactions with a retail establishment. Each SST or POS terminal in any retail establishment may be connected to different peripheral devices. Each SST or POS terminal may also execute different software, such as having different underlying operating systems (Linux, Windows etc.) and different software applications. This is typically dependent upon the retail establishment where the SST or POS terminal is used, and the intended use of the SST or POS terminal in the retail establishment. From time to time, the software executing on the SST or POS terminal may also be upgraded or the connected peripheral devices may change.

Due to the variations that are often present from terminal to terminal, software developers have started making use of software containers that contain the software that needs to be executed on an SST or POS terminal. Software containers isolate the running software thus helping to avoid complex platform dependencies. That is to say that they are able to execute on one or more processors of a terminal independent of the computing environment of that terminal. This is because a software container contains all of the software (application code as well as any software dependencies) it needs to be executable in any computing environment. Additionally, as these containers operate in their own isolated computing environment (except for certain predefined communication pathways with other software/hardware (such as access to specific files, specific ports) outside the software container), this also makes them particularly secure. Software containers are thus an effective way of packaging and distributing software for use on SSTs and POS terminals. When a software or hardware upgrade is performed on a terminal, a new software container can be executed on the terminal that accounts for these upgrades. Also, since the containers can be pre-built, this can help avoid complex builds on every terminal. It is noted that software containers are different to virtual machines in that they do not require a hypervisor to be installed on the computing device. Software containers are also typically more lightweight and run faster than virtual machines. Furthermore, whereas virtual machines virtualise the entire computer system, software containers virtualise the operating system. Software containers also share a single operating system whereas each virtual machine has its own operating system.

When deploying a software container, a container engine (such as docker, RKT, CRI-O, and LXD or the like) is utilised. The container engine can accept user requests or requests from an API server of a container orchestrator (such as Kubernetes, Swarm, Mesos, or the like), pull image files (in a particular image format) from a registry, prepare a container mount point, prepare metadata that is needed to execute a software container and call a container runtime. The container runtime is a part of the container engine. The container runtime (such as runc, containerd, crun, railcar, katacontainers, or the like) uses the mount point and the metadata provided by the container engine and communicates with the kernel (of a host OS) running on the computing device in order to execute a container image file and thereby create a software container.

When implementing multiple containers across multiple computing devices, a software container orchestrator platform is often used. These platforms are able to schedule container workloads across multiple computing devices (e.g., SSTs or POS terminals) and are also able to provide a standardized application definition file (e.g., kube YAML, docker compose, or the like). Kubernetes is an example of a container orchestration platform.

A Kubernetes container orchestration platform is a cluster of units, including a controlling unit called the Kubernetes master, which manages the cluster, and at least one node (or worker) which runs workloads (containers). One part of the Kubernetes orchestrator platform is the kubelet. The kubelet is an agent that runs on every worker which is part of the Kubernetes system. During operation, the kubelet receives commands (from an API server on a Kubernetes master) that informs the kubelet what container(s) should be running on a computing device. In Kubernetes, these containers are provided within 'pods'. Typically a single pod includes a single container although it is possible to include multiple containers within a pod. The kubelet passes information regarding what container(s) should be running on a computing device to a container engine (e.g., via a Container Runtime Interface (CRI)) for execution of a software container via a container runtime within the container engine.

A software container is created when a container runtime executes an executable container image file. As such, a software container is essentially a runtime instance of an associated executable container image file. In this sense, an executable container image file is an image file that has all of the software it needs to at least be executable as a software container element. In more detail, a container image file is typically a binary file that includes all the necessary requirements for running a software container, in addition to any metadata describing needs and capabilities of the software container. The container image file itself is made up of several layers that define the executable instructions needed for running the software container. For example, a container image file may include several layer(s) which define a software application(s) executable code, several layers(s) defining code for any software dependencies upon which the software application(s) rely, and several layer(s) defining code for any required configuration settings. Container image files are often stored in a container image registry. Each container image file is stored in a particular container image format that defines the layers and metadata within a container image file. For example, the Open Container Initiative (OCI) image format defines the image file as tar files for each layer and a manifest file in JSON format which specifies the metadata associated with the image file.

When deploying software containers on SSTs and POS terminals, if customised container images are built by end users (e.g., staff associated with a retail establishment) from scratch according to the needs of a specific terminal, this can result in knowledge of how to build the containers being propagated further than it should and introduces the risk that problems during the build process result in container images that do not function as expected. Taking this approach also often does not adapt well to real-world changes, which can only be accommodated by building a new container image.

Thus, pre-built container image files can be prepared in advance. In order to provide pre-built container image files to users that should work for any terminal, a single container image file could be created that includes all software that might possibly be needed independent of the hardware/software running on any given terminal. Alternatively, a series of unique container image files could be created, with each unique image file including a permutation of a subset of possible software from all of the possible software that might be needed on a terminal.

However, creating a single container image file presents problems in that it results in a container image (and thus a running container) that is suboptimal from a resource perspective (disk, RAM, etc.). For example, if a different portion of code was needed for each of 10 specific peripheral devices that are connectable to a terminal, then to ensure a software container image file has everything it needs independent of the hardware/software running on a specific terminal, all 10 portions of code would need to be included within the image file. This results in a container image file with a size which is much larger than it needs to be for many terminals (e.g., for a terminal that only has one peripheral device). Having such a size may result in the speed at which the image file can be downloaded and upgraded and the speed at which the container runs being slower than if the container image file only included the code needed for a specific terminal. In reality, there are many different peripheral devices (much more than 10) that could be connected to a terminal and so the size of the pre-built single image file may have to be significantly large.

If a container image file is created for each real-world permutation of the software that might be needed on a specific terminal, this presents problems in that many container images may need to be built, distributed and managed. For example, if a different portion of code was needed for each of 10 specific peripheral devices that are connectable to a terminal, then to ensure there is a custom image file for each real-world combination, there would need to be a unique image file created each including a permutation of a subset of the 10 portions of code (e.g., image 1 - portion 1, image 2 - portion 1 + portion 2, image 3 - portion 1 + portion 3 etc.). This would result in approximately 1000 different image files. In reality, there are many different peripheral devices (much more than 10) that could be connected to a terminal and so the number of unique container images that would be needed may be significantly more than 1000.

In the resource constrained 'edge' environment of a retail store neither of these approaches may be tenable.

### Summary

It is an aim of the present invention to at least partly mitigate one or more of the above-mentioned problems.

It is an aim of certain embodiments of the present invention to help dynamically assemble an executable image file for execution as a software container element.

It is an aim of certain embodiments of the present invention to help avoid having to build specific container images for each terminal installation (terminal type, peripheral device set, product etc.).

It is an aim of certain embodiments of the present invention to help optimise the way in which container image files are assembled according to the specific needs of an SST or POS terminal.

It is an aim of certain embodiments of the present invention to help provide a method of assembling image files which can adapt quickly to any changes in hardware or software on a terminal.

It is an aim of certain embodiments of the present invention to help provide a container registry which includes a plurality of predefined modular image files, each modular image file including a single layer that includes executable instructions that might be needed in an executable image file for execution as a software container to be executed on an SST or POS terminal.

It is an aim of certain embodiments of the present invention to help provide a plurality of predefined modular image files, each respective modular image file including at least one layer defining executable instructions for communicating with a respective peripheral device that is connectable to an SST and/or POS terminal.

It is an aim of certain embodiments of the present invention to help provide a proxy that is communicatively disposed between a container engine and a container registry, the proxy being configured to create a container image manifest that enables the container engine to assemble the executable image file from a plurality of predefined modular image files.

It is an aim of certain embodiments of the present invention to help provide a proxy that communicates with a container engine and a container registry, the proxy being configured to dynamically create a container image manifest 'on the fly' according to container requirements.

According to a first aspect of the present invention there is provided a computer-implemented method for assembling an executable image file for execution as a software container element, comprising the steps of: assembling an executable image file, for execution as a software container element, from a plurality of predefined modular image files, each predefined modular image file comprising at least one layer defining executable instructions.

Aptly, the method further comprises assembling the executable image file from at least one first predefined modular image file of said a plurality of predefined modular image files and at least one second predefined modular image file of said a plurality of predefined modular image files, whereby at least one of or each said first predefined modular image file comprises at least one layer defining executable instructions that cannot be executed as the software container element without executable instructions defined by at least one layer of at least one said second predefined modular image file.

Aptly, the method further comprises providing the at least one first predefined modular image file as at least one peripheral device driver image file; and providing the at least one second predefined modular image file as at least one base operating system image file and at least one software dependencies image file.

Aptly, the method further comprises providing the at least one peripheral device driver image file as a scanner driver image file and/or a printer driver image file and/or a scale driver image file and/or a laser scanner driver image file.

Aptly, the method further comprises providing the software dependencies image file as an image file comprising a driver layer and/or a common layer and/or a utilities layer.

Aptly, the method further comprises responsive to executing the executable image file, providing the software container element as an element that contains executable software defined by the executable image file and that is executable on one or more processors of a computing device.

Aptly, the method further comprises providing the executable software as software that is executable independent of computing environment.

Aptly, the method further comprises via the software container element, executing the executable software in an isolated computing environment.

Aptly, the method further comprises prior to the assembling, via a container engine element that is configured to execute executable image files, requesting an executable image file for execution as the software container element.

Aptly, the method further comprises transmitting the request for the executable image file to a container image registry or to a proxy that is configured to communicate with the container runtime element and the container image registry.

Aptly, the container image registry and/or the proxy is stored in local memory on a computing device and/or on at least one server.

Aptly, the method further comprises receiving, at the container engine element, a container image manifest that defines each predefined modular image file to be included within the executable image file.

Aptly, the method further comprises receiving the container image manifest from a proxy that is configured to communicate with the container engine element and the container image registry.

Aptly, the method further comprises responsive to receiving the container image manifest, via the container engine element, assembling the executable image file.

Aptly, the method further comprises at the container engine element, receiving each predefined modular image file needed to assemble the executable image file from a container image registry; and assembling the executable image file.

According to a second aspect of the present invention there is provided a computing device comprising one or more processors configured to execute executable software, wherein the executable software, when executed, is configured to: assemble an executable image file, for execution as a software container element, from a plurality of predefined modular image files, each predefined modular image file comprising at least one layer defining executable instructions.

Aptly, the computing device is a point of sale terminal or self-service terminal.

According to a third aspect of the present invention there is provided a computer-implemented method for assembling an executable image file for execution as a software container element, comprising the steps of: receiving a request for an executable image file from a container engine element that is configured to execute executable image files; and responsive to determining that each of a plurality of predefined modular image files usable to assemble the executable image file is accessible in memory, providing a container image manifest, that defines each predefined modular image file to be included within the executable image file, to the container engine element for assembly of the executable image file.

According to a fourth aspect of the present invention there is provided a computing device comprising one or more processors configured to execute executable software, wherein the executable software, when executed, is configured to: receive a request for an executable image file from a container engine element that is configured to execute executable image files; and responsive to determining that each of a plurality of predefined modular image files usable to assemble the executable image file is accessible in memory, provide a container image manifest, that defines each predefined modular image file to be included within the executable image file, to the container engine element for assembly of the executable image file.

According to a fifth aspect of the present invention there is provided a computer program comprising instructions which, when executed by a computing device, cause the computing device to carry out the steps of the method defined by the first aspect or the third aspect of the present invention.

Certain embodiments of the present invention help provide a methodology for assembling a container image file 'on the fly' according to the needs of a software container that is to be executed on an SST or POS terminal.

Certain embodiments of the present invention help provide a plurality of predefined modular image files that are usable for assembling an executable image file, wherein each of the plurality of predefined modular image files includes a single image layer defining executable instructions.

Certain embodiments of the present invention help provide an executable image file having a plurality of image layers defining the executable instructions that are needed according to the requirements of a software container that is to be executed on an SST or POS terminal. Each respective image layer of the executable image file corresponds to a single layer that is included within a respective predefined modular image file.

Certain embodiments of the present invention help provide a container image manifest which enables a container engine to assemble an executable image file from a plurality of predefined modular image files stored in a container registry.

Certain embodiments of the present invention help provide a computing device that executes software thereby resulting in the assembly of an executable image file.

Certain embodiments of the present invention help provide a computing device that executes software thereby resulting in the provision of a container image manifest that enables the assembly of an executable image file.

Certain embodiments of the present invention help provide a methodology for dynamically assembling an executable image file according to the software/hardware requirements of a specific SST or POS terminal, which avoids the need to have a unique image file for the specific terminal or an image file having all software that might be needed on any terminal.

### Brief Description of The Drawings

Embodiments of the present invention will now be described hereinafter, by way of example only, with reference to the accompanying drawings in which:
Figure 1 illustrates a computing system;
Figure 2 illustrates a computing system under the control of a Kubernetes orchestration platform;
Figure 3 illustrates a hardware and software architecture for a self-service terminal that executes several software containers;
Figure 4 illustrates software container elements that execute on a self-service terminal;
Figure 5 illustrates software that executes on a server in communication with multiple self-service terminals;
Figure 6 illustrates the layers of an executable image file;
Figure 7 illustrates the assembly of an executable image file from predefined modular image files;
Figure 8 illustrates a computing system that shows how requests for image files are handled;
Figure 9 illustrates a computing system in which third-party peripheral devices are connected to a self-service terminal;
Figure 10 illustrates another computing system in which third-party peripheral devices are connected to a self-service terminal; and
Figure 11 illustrates a flow chart describing how an executable image file is assembled from predefined modular image files.

In the drawings like reference numerals refer to like parts.

### Detailed Description

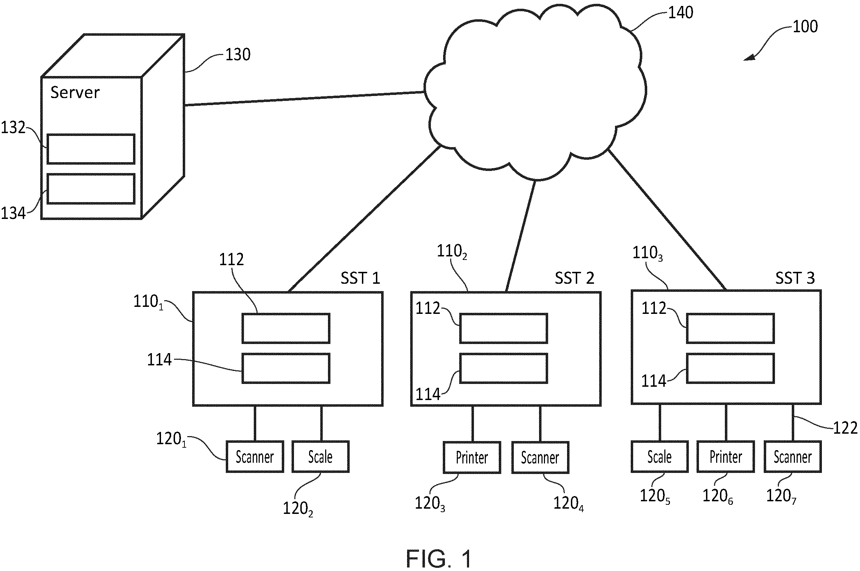

Figure 1 illustrates a computing system 100. In the computing system 100 there are three self-service terminals (SSTs) 110₁, 110₂, 110₃. The SSTs are an example of a computing device. In certain other embodiments of the present invention, the computing device may be a Point of Sale (POS) terminal, an Automated Teller Machine (ATM), a personal computer, a laptop, a tablet or the like. Each SST includes one or more processors 112 and at least one memory 114. The memory is a non-transitory computer-readable storage medium. The memory 114 stores executable software that is executable by the processors 112 of the SST. Each SST may also include a communication interface (not shown) for communicating with a server and one or more communication interfaces (not shown) for communicating with connected peripheral devices. In the system illustrated in Figure 1, a scanner peripheral device 120₁ and a scale peripheral device 120₂ is connected to the first SST 110₁. Also, a printer peripheral device 120₃ and a scanner peripheral device 120₄ is connected to the second SST 110₂. Also, a scale peripheral device120₅, printer peripheral device 120₆ and scanner peripheral device 120₇ are connected to the third SST 110₃. It will be appreciated in certain other embodiments of the present invention each SST may be connected to different combinations of peripheral device. Each peripheral device may communicate with the SST it is connected to via a wired interface 122. It will be appreciated that in certain other embodiments of the present invention the interface may be wireless or a combination of wired and wireless. Each SST communicates with a server 130 via a network 140. The server is also an example of a computing device. The network 140 may be wired, wireless or a combination of wired and wireless. The server 130 also includes one or more processors 132 and at least one memory 134. The memory 134 is also a non-transitory computer readable storage medium. The memory 134 stores executable software that is executable by the processors of the server. The executable software of the SSTs and the server will be described in more detail below.

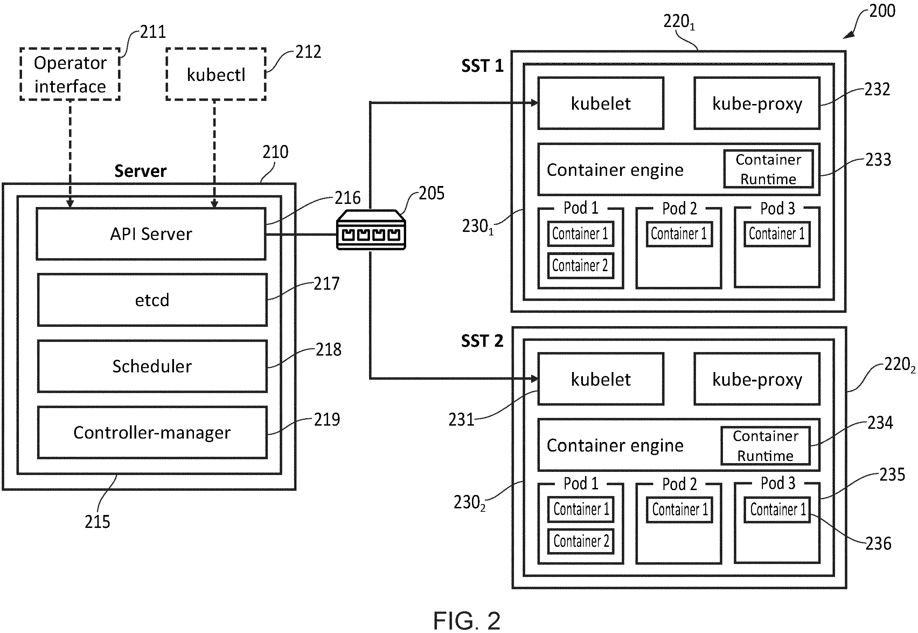

Figure 2 illustrates a computing system 200. The computing system has several components under the control of a Kubernetes container orchestration platform. As such, the system may be referred to as a Kubernetes cluster. The Kubernetes cluster includes a server 210, on which a Kubernetes master 215 runs, and self-service terminals (SSTs) 220₁, 220₂, on which respective Kubernetes workers 230₁, 230₂ run. It will be appreciated that the server 210 may be a physical server or a cloud server. The server 210 and the SSTs communicate over a network 205 such as a local area network or the internet. The network may be wired and/or wireless. It will be appreciated that devices other than SSTs may be connected to the network and run a Kubernetes worker.

The Kubernetes master 215 which runs on the server 210 includes an API server 216 that manages the Kubernetes cluster. The API server 216 issues commands based on information it receives from other internal components of the master 215 and interfaces with external components such as kubectl 212 and kubelets (such as kubelet 231 on SST2 220₂) which are running on Kubernetes workers 230₁, 230₂. Etcd 217 is a distributed database for the Kubernetes cluster which stores information such as the configuration of the cluster. Etcd 217 also stores the desired state of the Kubernetes workers 230₁, 230₂ and the actual state of the Kubernetes workers 230₁, 230₂. A state may be understood as being an indication of the pods (such as Pod 3 235 on SST2 220₂) and their containers (such as container 236 in Pod 235) that are running on each Kubernetes worker 230₁, 230₂ in the cluster. A scheduler 218 monitors when new pods are to be run on a Kubernetes worker and then decides which Kubernetes worker to deploy them on. A controller-manager 219 runs controller processes which attempt to move the actual state of the Kubernetes workers 230₁, 230₂ closer to the desired state specified on etcd 217. The master 215 also contains kubectl 212, a command-line tool for communicating with the Kubernetes cluster via the API server 216, and an operator interface 211.

Each Kubernetes worker 230₁, 230₂ located within the Kubernetes cluster runs on an SST. According to certain embodiments of the present invention, the worker may run on a virtual machine of the SST. The worker 230 is able to communicate with other workers 230 and the master 215 through the network 205. Each worker 230 has a kubelet that manages the operation of the worker 230. The kubelet (such as kubelet 231 on SST 220₂) issues commands to the other components of the worker 230₂, monitors the pods running on the worker (such as pod 235) and their containers (such as container 236), and communicates with the API server 216. The kubelet 231 receives deployment files and ensures that the containers 236 described in those deployment files are running and healthy. A kube-proxy (such as kube-proxy 232) is a network proxy which enables pods, in both the same Kubernetes worker and a different worker to communicate. A container engine (such as engine 233) runs and manages containers, receiving commands from the kubelet and container images from a registry. The container engine prepares container metadata which is passed on to a container runtime (such as container runtime 234), that is responsible for the running of the containers within the Kubernetes worker that the runtime is located within.

A pod exists within any Kubernetes worker after the pod is deployed to a Kubernetes worker by the API server 216 of the Kubernetes master 215. The pod commonly includes a single container although the pod may comprise multiple containers with similar functions, which will share storage and network resources. The pod is able to request access to specific resources available to the worker through the kubelet, or to communicate with other pods by using the kube-proxy.

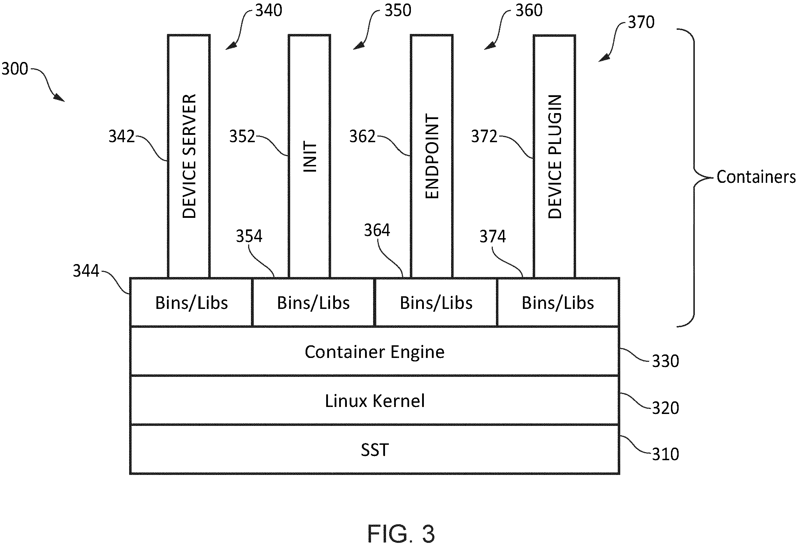

Figure 3 illustrates a hardware and software architecture 300 for a self-service terminal that is configured to execute several software container elements. In Figure 3, the underlying hardware is an SST 310. This may be one of the SSTs described with respect to Figure 1 or Figure 2. As described hereinabove, the SST includes one or more processors and at least one memory. The memory stores executable software that is executable by the processors. The executable software includes a Linux kernel 320 which may be part of a Host Operating System (such as Unix, Ubuntu or the like). It will be appreciated that in certain other embodiments of the present invention other kernels and other host operating systems could be utilised (Windows, Mac etc.). Also included as part of the executable software is a container engine 330. The container engine is responsible for accepting user requests or requests from an API server of a container orchestrator (such as Kubernetes, Swarm, Mesos, or the like), pulling image files (in a particular image format) from a registry, preparing a container mount point, preparing metadata that is needed to execute a software container and calling a container runtime. The container runtime (not shown) is a part of the container engine. The container runtime (such as runc, containerd, crun, railcar, katacontainers, or the like) uses the mount point and the metadata provided by the container engine and communicates with the Linux kernel 320 running on the computing device in order to execute several container image files and thereby create several software containers. The executable image files for each of the software containers shown in Figure 3 may be assembled as described herein. Once assembled, they may be stored in memory on the SST. In Figure 3, four software container elements are illustrated. A first software container element 340 is referred to as the device server container. The device server container includes application software 342 and associated binaries and libraries 344 (the binaries and libraries may be referred to as software dependencies). The application running in the device server container is responsible for controlling, configuring or otherwise accessing one or more of the peripheral devices connected to the SST at a low level and exposing business level functions across the network to other components of the SST. For example, the device server may talk via the 'USB' protocol to a scanner (low-level) and report scanned bar-codes (business level) to other components. The software within the device server container is able to access the peripheral device paths and thus use or interact with the peripheral devices. A second software container element 350 is referred to as the INIT container. The INIT container includes application software 352 and associated binaries and libraries 354 (the binaries and libraries may be referred to as software dependencies). The application running in the INIT container initialises in its Pod before the main (non-INIT) containers start. The INIT container is a concept of the Kubernetes system but it will be appreciated that containers which are configured to execute first (i.e., before other containers) may also be utilised in other container orchestration platforms. A third software container element 360 is referred to as the Endpoint container. The Endpoint container includes application software 362 and associated binaries and libraries 364 (the binaries and libraries may be referred to as software dependencies). The application running in the Endpoint container makes information about an SST, such as the motherboard Universally Unique Identifier (UUID), available to the rest of the Kubernetes cluster. A fourth software container element 370 is referred to as the device plugin container. The device plugin container includes application software 372 and associated binaries and libraries 374 (the binaries and libraries may be referred to as software dependencies). The application running in the device plugin container is responsible for advertising what peripheral devices are connected to the SST. As can be seen in Figure 3, each software container element has its own binaries and libraries (bins/libs). However, it will be appreciated that according to certain other embodiments of the present invention any combination of containers could share bins/libs.

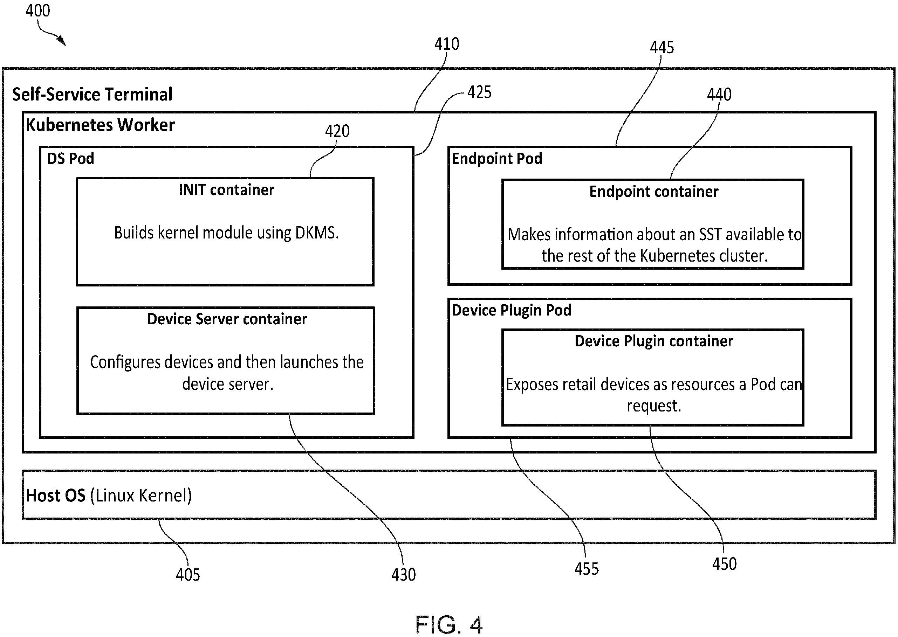

Turning now to Figure 4, what is illustrated is a self-service terminal 400 and the software container elements that are configured to be executed on the self-service terminal (that is on one or more processors of the SST). Each of the software containers on the SST contains executable software (defined by an image file). The executable software is executed in the containers in such a way that the software is executed in an isolated computing environment. The software is isolated in the sense that it does not depend on any of the other software containers also executing on the SST to operate. The software effectively executes in its own computing environment and communicates with hardware/software outside this environment through predefined communication pathways. Providing the executable software within software containers means that the software is able to be executed independent of computing environment. In Figure 4, the containers are managed using the Kubernetes container orchestration platform. The SST shown in Figure 4 may be the SST described with reference to any of Figures 1-3 above. The SST 400 runs a Linux kernel 405 as part of a Host Operating System. Other Operating Systems could of course be used according to certain other embodiments of the present invention. Using the Kubernetes system, the self-service terminal executes software referred to as a Kubernetes worker 410. The Kubernetes worker may also be referred to as a node. A first software container element 420, a second software container element 430, a third software container element 440 and a fourth software container element 450 are included within the Kubernetes worker 410. The Kubernetes platform is responsible for managing these containers as described with reference to Figure 2. The first, second, third and fourth software containers may be the same containers as described with reference to Figure 3. The self-service terminal 400 also includes additional software (not shown) that executes external to the Kubernetes worker 410. In the Kubernetes worker 410, the first software container 420 and the second software container 430 are executed within a single pod referred to as a device server pod 425. Because the first software container 420 is of the INIT type, it is the first container executed within the device server pod (i.e., it executes before the device server container). The third software container 440 is executed within a single pod referred to as an Endpoint pod 445. The fourth software container 450 is executed within a single pod referred to as a Device Plugin pod 455. The creation of each of these pods is defined by three different pod specification files (i.e., deployment.YAML files) as will be appreciated by a person of skill in the art. Pods are used in Kubernetes to provide containers with shared storage and network resources, and a specification for how to run the containers within the pods.

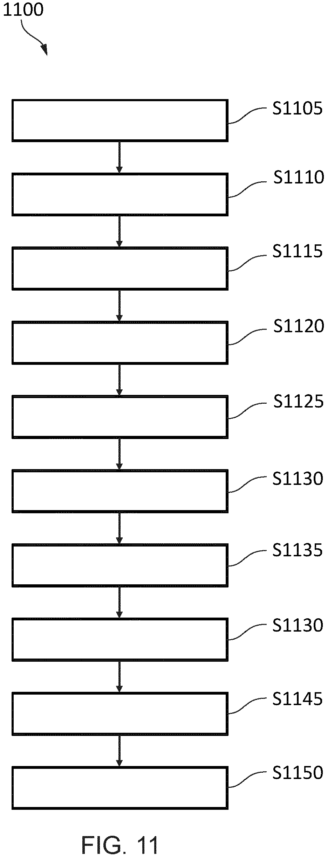

During operation of the SST 400, each of these pods/containers are executed by a container runtime (not shown) of a container engine (not shown). The image file associated with each of these containers may be assembled as described herein. Alternatively, in certain embodiments of the present invention, image files for select containers (e.g., the device server container) may be assembled as described herein whereas the other image files for the other containers within the SST may be stored in a container image registry and received directly at the SST without the need for any assembly. The methodology for assembling an executable image file for a software container is described in Figure 11.

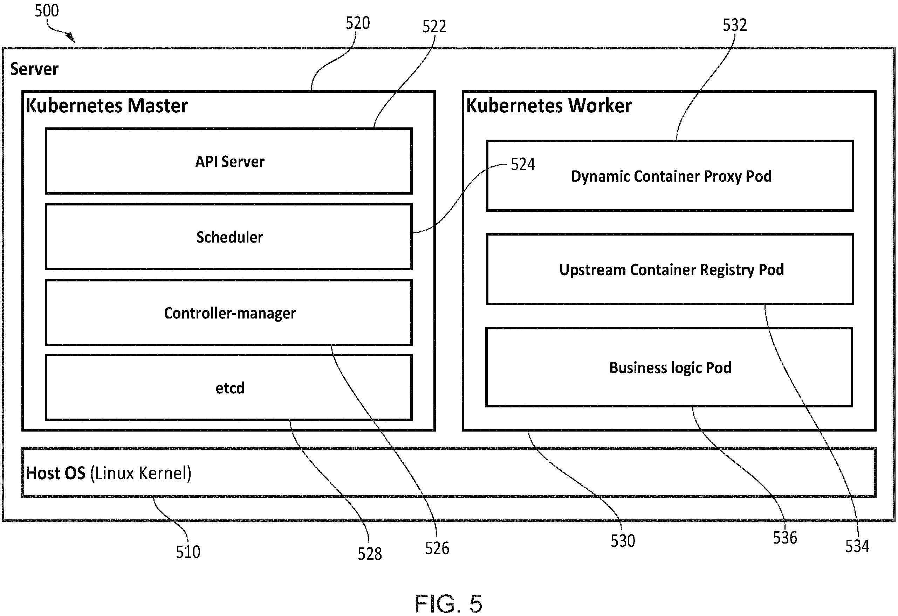

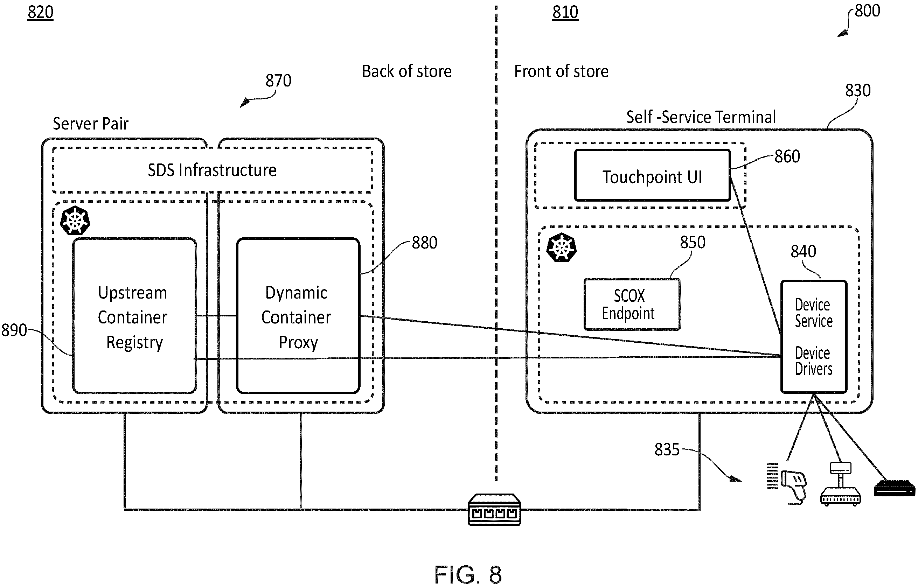

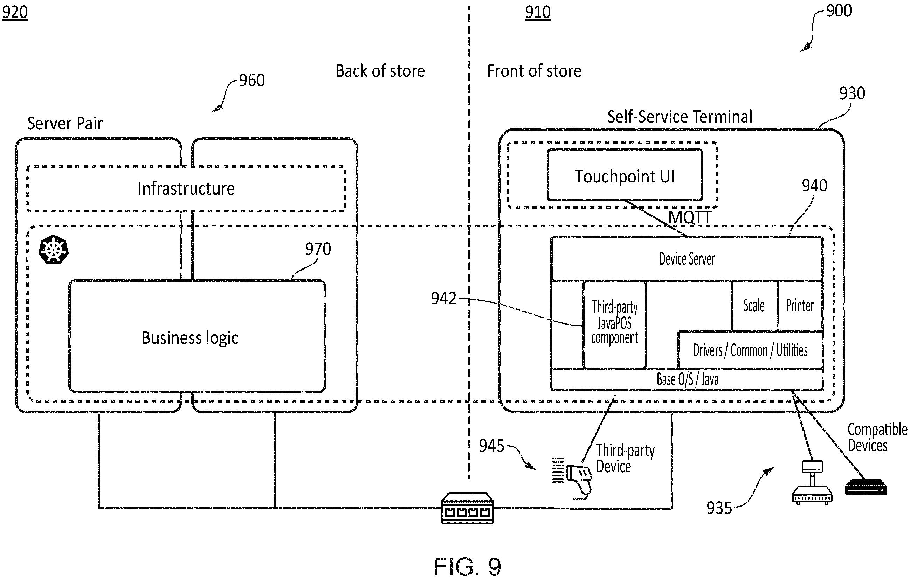

Figure 5 illustrates a server 500 running Kubernetes master and Kubernetes worker in isolation. The server may be in communication with multiple SSTs (not shown in Figure 5). The server has one or more processors (not shown) and at least one memory (not shown). The memory stores executable software that is executed by the processors at runtime. The executable software includes a Linux kernel 510 (of a Host OS). It will be appreciated that in certain other embodiments of the present invention, other Operating Systems can be used. The executable software also includes a Kubernetes master 520. The Kubernetes master includes similar components as described above with reference to Figure 2. These are an API server 522, Scheduler 524, Controller-manager 526 and etcd database 528. A Kubernetes worker 530 also executes on the server. The Kubernetes worker 530 includes three pods which themselves include a software container element. A first pod on the server is a dynamic container proxy pod 532. This pod includes a corresponding dynamic container proxy software container. The dynamic proxy software container is responsible for receiving requests from a container engine for executable image files and creating and providing a manifest to the container engine defining which predefined modular image files the container engine will need to assemble an executable image file. The operation of the proxy container is explained in more detail below with reference to Figures 9 and 15. A second pod on the server is an upstream container registry pod 534. This pod includes a corresponding upstream container registry software container. The registry container is responsible for storing each predefined modular image file and providing these image files to the container engine on request. The operation of the registry container is explained in more detail below with reference to Figures 8 and 11. A third pod on the server is a business logic pod 536. This pod includes a corresponding business logic software container.

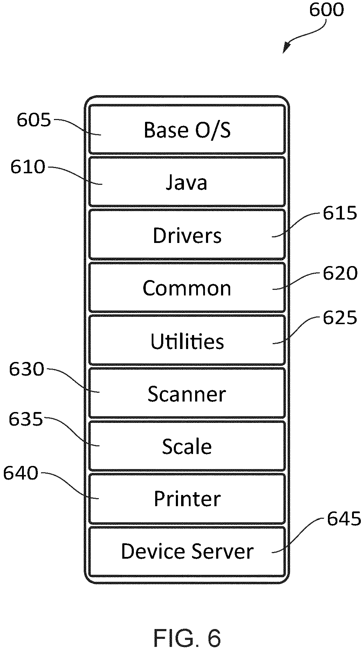

Figure 6 illustrates a schematic representation of an executable image file 600 for execution as a software container. The image file shown in Figure 6 is executable to provide the device server container of Figure 4. The executable image file has been assembled as described in Figure 11. As can be seen in Figure 6, the executable image file has a Base Operating System layer 605, a Java layer 610, a Drivers layer 615, a Common layer 620, a Utilities layer 625, a Scanner layer 630, a Scale layer 635, a Printer layer 640 and a Device Server layer 645. Whilst the executable image file in Figure 6 has been assembled from a series of modular image files each having a single layer, it will be appreciated that any combination of the layers in the executable image file may be combined into a single modular image file according to certain embodiments of the present invention. This may be the case for example with the Base OS and Java layer. This may also be the case with the Drivers, Common and Utilities layer. Additionally, whilst in Figure 6 the executable image file has been assembled from a series of single layer modular image files, each of the modular image files (e.g., the Java image file or the Drivers image file) may have more than one layer in certain other embodiments of the present invention.

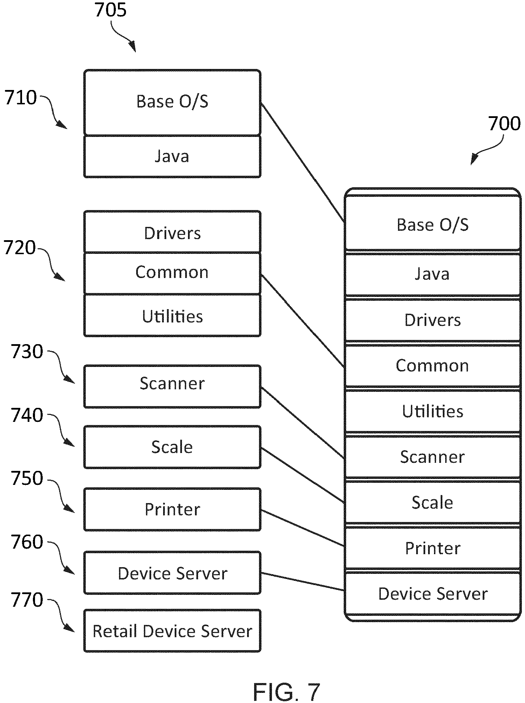

Figure 7 helps to illustrate the assembly of an executable image file 700 from a series of predefined modular image files 705. The image file shown in Figure 6 is executable to provide the device server container of Figure 4. In Figure 7, there is a first predefined modular image file 710 with two layers, one layer defining executable instructions for a base operating system and one layer defining executable instructions for interpreting a Java programming language. This may be referred to as a Base OS image file. Of course, in certain other embodiments of the present invention, the Base OS and Java layers may be provided as separate modular image files. It will also be appreciated that in certain other embodiments of the present invention, the Java layer may not be needed when other programming languages are used. The Base OS layer defines the operating system that is to be utilised within the software container (e.g., Ubuntu). However, the Base OS layer may not be needed in certain other embodiments of the present invention. Figure 7 also illustrates a second predefined modular image file 720 with three layers. This may be referred to as a software dependencies image file. The first layer defines executable instructions for drivers. The Drivers layer is an optional layer which defines executable instructions responsible for installing user-space drivers into the image. An example of a user-space driver might be a low-level USB helper. It will be appreciated that some images may not require any user-space drivers. The second layer is a Common layer. The Common layer defines executable instructions containing framework components that are shared or used by other layers. An example of such a framework may be a logging framework that is used to control and capture logs from other components. The third layer is a Utilities layer. The Utilities layer is an optional layer defining executable instructions including user facing utilities and tools. An example of such a tool may be a system maintenance utility that can be used to view the list of devices that are installed on the SST and interact with them with operations such as running a diagnostic check. In certain other embodiments of the present invention, it will be appreciated that each of the drivers, common and utilities layers may be provided within their own predefined modular image file. It will also be appreciated that the driver layer and/or common layer and/or utilities layer may not be required in certain embodiments of the present invention. Figure 7 also shows a third predefined modular image file 730 with a single layer defining executable instructions for communicating with a scanner peripheral device, a fourth predefined modular image file 740 with a single layer defining executable instructions for communicating with a scale peripheral device and a fifth predefined modular image file 750 with a single layer defining executable instructions for communicating with a printer peripheral device. These image files may be referred to as peripheral device driver image files. It will be appreciated that the modular image files for the scanner, scale and printer are image files associated with a specific scanner, scale or printer. As an example, the scanner may be an NCR 2356 Hand Held Scanner, the scale may be an NCR 8789 Scale, and the printer may be an NCR 7169 thermal receipt printer. It will also be appreciated that in certain other embodiments of the present invention, modular image files associated with other peripheral devices (barcode reader, cameras etc.) may be needed. It will also be appreciated that the peripheral device image files shown in Figure 7 may not always be needed. In Figure 7 there is also a sixth predefined modular image file 760 with a single device server layer defining executable instructions for controlling, configuring or otherwise accessing one or more of the peripheral devices connected to the SST at a low level and exposing business level functions across the network to other components of the SST. Figure 7 also shows an optional seventh predefined modular image file 770 with a single retail device server layer. The modular image file 770 may be used in place of the image file 760 when the container is to be executed on a POS terminal. It will be appreciated that other predefined modular image files usable to assemble other executable image files (e.g., for the other containers of Figure 4) may be defined accordingly to meet the needs of the specific executable image file to be assembled.

A deployment file provides one way of specifying which layers are to be assembled for an executable image file. The deployment file can achieve this by encoding the layers in the name of the container. For example, each element of the name may be the name of a layer to include. Other ways of defining the layers to assemble could be used - for example a ConfigMap could list the layers and give the list of layers a name and then the name could be referenced as the image name.

A deployment file may be utilised by a Kubernetes master or a container engine running on an SST in order to prompt some of the steps discussed in Figure 11. That is to say that the container engine processes this deployment file in order to initiate the steps needed to assemble an executable image file from a series of predefined modular image files. The deployment file specifies the number and configuration of pods running a container or containers in a Kubernetes cluster.

Figure 8 illustrates a computing system 800 with a front end 810 and a back end 820. In the front end, there is an SST 830. This may be one of the SSTs as described above with reference to Figures 1-4. The SST has three connected peripheral devices 835. The SST 830 has processors (not shown) and a memory (not shown). The memory stores executable software that can be executed by the processors. In Figure 8, the SST is executing a first software container 840 and a second software container 850 within the Kubernetes framework. The first software container may be the device server container of Figure 4. The second software container may be the Endpoint container of Figure 4. Also included within the SST is executable software 860 associated with a User Interface of the SST. This is a web-based user interface. However, other browsers may be used in certain other embodiments of the present invention. The Ul communicates with the first software container element via an MQTT protocol. When a user interacts with the SST via the user interface, commands are sent to the first software container element which processes the commands. Once the commands are processed, the first software container might communicate with the server and/or with the peripheral devices and/or may return instructions to the user interface as needed.

In the back end 820, there is a server pair 870. It will be appreciated that in certain other embodiments of the present invention, there may be only a single server or more than a pair of servers. Each server of the server pair has one or more processors (not shown) and at least one memory (not shown) which stores executable instructions for execution by the processors of the server pair. The executable software of the server pair includes a dynamic container proxy 880 and an upstream container registry 890. The proxy and the registry are executed on different servers of the server pair although it will be appreciated that in certain other embodiments of the present invention they may execute on the same server. The proxy and registry are also each provided as software containers within the Kubernetes framework. The proxy is responsible for handling requests for container image files from the container engine (not shown) running on the SST. The container registry is responsible for storing a plurality of predefined modular image files that are accessible by the container engine of the SST. The modular image files may be referred to as micro-container image files or just micro-containers (µ-containers). On startup of the SST (when no containers are executing), the container engine is executed on the processors of the SST and the container engine then sends a request to the proxy 980 for an executable image file. This request includes a name of an image defining a list of predefined modular image files that are required to assemble the executable image file. In response to this, the proxy communicates with the registry to determine whether the predefined modular image files required for the executable image file are stored therein. It does this by pulling an image manifest for each of the predefined modular image files stored in the registry and then checking that an image manifest is present for each of the predefined modular image files needed for the executable image file. If the proxy determines that all necessary modular image files are stored in the registry, then the proxy creates a new image manifest which defines each of the predefined modular image files the container engine will need to assemble the executable image file.

The proxy then sends this manifest to the container engine. In response to receiving this manifest, the container engine processes the manifest and communicates with the registry to pull or obtain the predefined modular image files it needs to assemble the executable image file. The container engine knows which modular image files it needs as this is defined in the image manifest created by the proxy. Once all necessary modular image files are received, the container engine then assembles these into a single executable image file. This is possible as the modular image files are additive. Thereafter, the container engine executes the executable image file in order to provide a software container element.

Figure 9 illustrates a computing system 900 with third-party peripheral device integration. In Figure 9, there is a front end 910 and a back end 920. In the front end, there is an SST 930. The SST has two connected peripheral devices 935 which have pre-built associated predefined modular image files. The peripheral devices 935 are provided by the same enterprise that provides the software container element 940 executing on the SST. Also connected to the SST is a third party peripheral device 945. As the device is provided from a third party, it initially has no pre-built associated predefined modular image file. Thus, when employing a third-party device, the third-party creates an associated predefined modular image file (e.g., just a single layer defining the executable instructions for communicating with this device) and provides this to the container registry (not shown). The executable image file needed for execution of the software container element 940 is then assembled according to the methodology described in Figure Hand as described above with reference to Figure 8. This is possible as in Figure 9 the third-party device has a modular image file 942 which uses the same Base OS as the other modular image files. In the back end 920, there is a server pair 960. The server pair includes processors that executes business logic element 970.

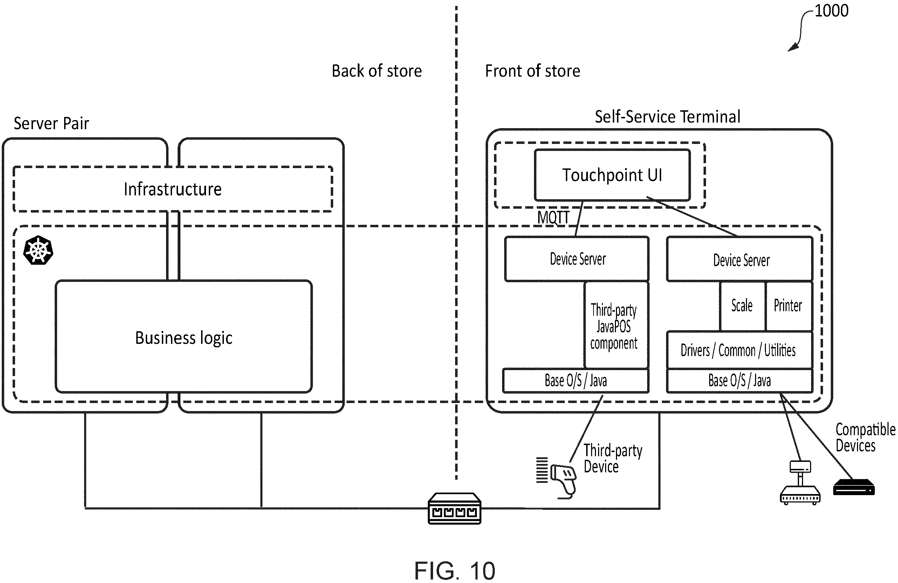

Figure 10 illustrates another computing system 1000 with third-party device integration. This system is similar to that described with reference to Figure 9 above. However, instead of incorporating the predefined modular image file for the third-party peripheral device that has been created and stored in a container registry into a single assembled executable image file, two executable image files are assembled. One executable image file includes the predefined modular image files associated with peripheral devices which have not been created by a third-party. The other executable image file includes the predefined modular image files associated with peripheral devices which have been created by a third-party. This is possible as in Figure 10 the third-party device has a modular image file which uses the same Base OS as the other modular image files. The assembly of each of these files is as described in Figure 11 or with reference to Figure 8 above. In other words, Figure 10 represents a different way of handling third-party devices so that rather than integrating them into a single container, a new container is created but the same device server and base O/S layer can be re-used and assembled in the same way.

It will be appreciated that peripheral virtualisation may be used to enable integration of drivers associated with different OSs (e.g., Linux and Windows) such that devices that are connected to a POS running Linux may be made available on a Windows virtual machine, or vice versa.

Figure 11 illustrates a flowchart 1100 of certain steps that take place during the assembly of an executable image file for execution as a software container element executable on an SST. The SST may be any of the SSTs illustrated in Figures 1-13. When an SST is initially deployed, it is known what software is to be installed on the SST and what peripheral devices are to be connected to the SST. Using this information, a first step S1105 is creating a deployment file for each software container that should be executed on the SST on startup. The deployment file, amongst other things, specifies a name of an image file. The image file is named to define a list of image files that are needed for an executable image file. As discussed above, a ConfigMap may also be used to define the list of image files. Once the deployment file is created, the deployment file is uploaded to an API server of a Kubernetes master that is running on a server in communication with the SST. The Kubernetes master may be the same master as illustrated with respect to Figure 2 or Figure 5. The API server receives the deployment file and stores the deployment file in the etcd database of the Kubernetes master.

A next step S1110 is powering on the SST. This occurs for example when the terminal is first used that day, for example after a period when a store is closed. It could also occur at other times such as when the terminal is restarted. The software on the SST, including the host OS and the Kubernetes worker configuration, is then loaded from the memory of the SST and executed by processors of the SST. Thereafter, a next step S1115 involves detecting, by a controller-manager of the Kubernetes master, a difference between the pods that should be executing on a Kubernetes worker associated with the SST as specified according to the etcd database and the pods that are actually executing on the SST. The available resources on the Kubernetes worker will also be checked to determine that the resources required by a pod are available on the Kubernetes worker. Responsive to detecting that pods that should be executing on the SST are not, and that suitable resources are available, the API server of the Kubernetes master sends information to a kubelet on the SST to resolve this inconsistency. This information includes a deployment file for each pod that is to be executed on the SST. It will be appreciated that according to certain other embodiments of the present invention that do not use the Kubernetes orchestration platform, containers may be executed without the need for being run within pods (which are a particular feature of the Kubernetes system). A next step S1120 involves receiving, by the kubelet, the information from the API server and passing deployment files to a container engine element.

A next step S1125 involves reading, by the container engine, the deployment files and requesting an executable image file by transmitting the request to a dynamic container proxy that is communicatively disposed between the container engine and a container registry (which stores a plurality of predefined modular image files). The request includes the name of the image file (from the deployment file) which defines a list of image files needed for the executable image file. The proxy and the registry may be stored in memory on a server and/or on a local memory of the SST. A next step S1130 involves parsing, by the dynamic container proxy, the name of the image file to check which predefined modular image files are needed for the executable image file. This can be achieved since the name of the image file is effectively an encoded list of the names of the required predefined modular image files. The proxy then performs a step (not shown) of checking that all specified predefined modular image files needed for the executable image file are available in memory. The proxy performs this checking step by receiving the manifests associated with each predefined modular image file from an upstream container registry and determining whether a corresponding manifest exists for each predefined modular image file represented in the name of the image file sent from the container engine to the proxy.

If the proxy determines that a manifest exists for each image file represented in the name sent to the proxy and thus that all necessary predefined modular image files are present in the registry, a next step S1135 involves dynamically creating, by the proxy, a container image manifest that defines each predefined modular image file to be included within the executable image file. These modular image files defined by the manifest are those which the deployment file specifies are needed for the executable image file. A next step S1140 then involves transmitting, by the proxy, the image manifest so that it is received by the container engine. It will be appreciated that the steps performed by the proxy may be performed by the SST or by the container registry according to certain other embodiments of the present invention.

Once the image manifest has been received by the container engine, a next step S1145 involves receiving, by the container engine, each of the predefined modular image files needed to assemble the executable image file. These modular image files are received from the container registry. The predefined modular image files received are those that have been defined in the image manifest received by the container engine. The receiving of the modular image files may also be referred to as 'pulling' the image files. Once the modular image files have been received by the container engine, a next step S1150 involves assembling the executable image file using each of the predefined modular image files received. The assembled executable image file can be executed as a software container element. The image file is thus executable in the sense that it has the capability of being executed as a software container. This contrasts with many of the predefined modular image files which cannot be executed as a software container on their own (i.e., without being assembled with other predefined modular image files). A next step (not shown) involves, executing, by the container engine, the executable image file to provide an instance of the executable image file as a software container element. The software container element thus contains executable software that can be executed on a processor (or multiple processors) of the SST. It will be appreciated that the steps described above which are performed by the container engine may be performed specifically by the container runtime of the container engine in certain embodiments of the present invention.

Another step (not shown) involves storing the executable image file in a memory of the SST and/or of the container registry. The executable image file then does not need to be assembled as described above every time the SST is restarted. However, if it is desired not to use memory for storing the image file, the executable image file may be assembled as described above each time the SST is started.

It will be appreciated that whilst certain embodiments of the present invention described above describe the assembly of a device server image file for a retail environment, certain other embodiments of the present invention may be used to assemble non-retail specific image files. The present invention can be used for any software that has a 'plugin architecture' where the plugins can be created as layers and assembled dynamically into a runnable container containing different combinations of the plugins.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A computer-implemented method for assembling an executable image file for execution as a software container element, comprising the steps of:
assembling an executable image file, for execution as a software container element, from a plurality of predefined modular image files, each predefined modular image file comprising at least one layer defining executable instructions.

2. The method as claimed in claim 1, further comprising:
assembling the executable image file from at least one first predefined modular image file of said a plurality of predefined modular image files and at least one second predefined modular image file of said a plurality of predefined modular image files,
whereby at least one of or each said first predefined modular image file comprises at least one layer defining executable instructions that cannot be executed as the software container element without executable instructions defined by at least one layer of at least one said second predefined modular image file.

3. The method as claimed in claim 2, further comprising:
providing the at least one first predefined modular image file as at least one peripheral device driver image file; and
providing the at least one second predefined modular image file as at least one base operating system image file and at least one software dependencies image file.

4. The method as claimed in any preceding claim, further comprising:
responsive to executing the executable image file, providing the software container element as an element that contains executable software defined by the executable image file and that is executable on one or more processors of a computing device.

5. The method as claimed in any preceding claim, further comprising:
prior to the assembling, via a container engine element that is configured to execute executable image files, requesting an executable image file for execution as the software container element.

6. The method as claimed in claim 5, further comprising:
transmitting the request for the executable image file to a container image registry or to a proxy that is configured to communicate with the container runtime element and the container image registry.

7. The method as claimed in claim 6, wherein the container image registry and/or the proxy is stored in local memory on a computing device and/or on at least one server.

8. The method as claimed in any preceding claim, further comprising:
receiving, at the container engine element, a container image manifest that defines each predefined modular image file to be included within the executable image file.

9. The method as claimed in claim 8, further comprising:
receiving the container image manifest from a proxy that is configured to communicate with the container engine element and the container image registry.

10. The method as claimed in claim 8 or 9, further comprising:
responsive to receiving the container image manifest, via the container engine element, assembling the executable image file.

11. The method as claimed in any preceding claim, further comprising:
at the container engine element, receiving each predefined modular image file needed to assemble the executable image file from a container image registry; and
assembling the executable image file.

12. A computing device comprising one or more processors configured to execute executable software, wherein the executable software, when executed, is configured to:
assemble an executable image file, for execution as a software container element, from a plurality of predefined modular image files, each predefined modular image file comprising at least one layer defining executable instructions.

13. A computer-implemented method for assembling an executable image file for execution as a software container element, comprising the steps of:
receiving a request for an executable image file from a container engine element that is configured to execute executable image files; and
responsive to determining that each of a plurality of predefined modular image files usable to assemble the executable image file is accessible in memory, providing a container image manifest, that defines each predefined modular image file to be included within the executable image file, to the container engine element for assembly of the executable image file.

14. A computing device comprising one or more processors configured to execute executable software, wherein the executable software, when executed, is configured to:
receive a request for an executable image file from a container engine element that is configured to execute executable image files; and
responsive to determining that each of a plurality of predefined modular image files usable to assemble the executable image file is accessible in memory, provide a container image manifest, that defines each predefined modular image file to be included within the executable image file, to the container engine element for assembly of the executable image file.

15. A computer program comprising instructions which, when executed by a computing device, cause the computing device to carry out the steps of the method defined by any of claims 1 to 11 or claim 13.

## Amended claims

### Amended claims in accordance with Rule 137(2) EPC.

1. A computer-implemented method for assembling an executable image file for execution as a software container element, comprising the steps of:
assembling (S1150) an executable image file (600, 700), for execution as a software container element, from a plurality of predefined modular image files (705), each predefined modular image file comprising at least one layer defining executable instructions.

2. The method as claimed in claim 1, further comprising:
assembling (S1150) the executable image file from at least one first predefined modular image file (710, 720, 730, 740, 750, 760, 770) of said a plurality of predefined modular image files (705) and at least one second predefined modular image file (710, 720, 730, 740, 750, 760, 770) of said a plurality of predefined modular image files (705),
whereby at least one of or each said first predefined modular image file (710, 720, 730, 740, 750, 760, 770) comprises at least one layer defining executable instructions that cannot be executed as the software container element without executable instructions defined by at least one layer of at least one said second predefined modular image file (710, 720, 730, 740, 750, 760, 770).

3. The method as claimed in claim 2, further comprising:
providing the at least one first predefined modular image file (710, 720, 730, 740, 750, 760, 770) as at least one peripheral device driver image file (730, 740, 750); and
providing the at least one second predefined modular image file (710, 720, 730, 740, 750, 760, 770) as at least one base operating system image file (710) and at least one software dependencies image file (720).

4. The method as claimed in any preceding claim, further comprising:
responsive to executing the executable image file, providing the software container element as an element that contains executable software defined by the executable image file and that is executable on one or more processors (112) of a computing device (110₁, 110₂, 110₃).

5. The method as claimed in any preceding claim, further comprising:
prior to the assembling (S1150), via a container engine element (233) that is configured to execute executable image files, requesting (S1125) an executable image file (600, 700) for execution as the software container element.

6. The method as claimed in claim 5, further comprising:
transmitting the request for the executable image file (600, 700) to a container image registry (890) or to a proxy (880) that is configured to communicate with the container runtime element (233) and the container image registry (890).

7. The method as claimed in claim 6, wherein the container image registry (890) and/or the proxy (880) is stored in local memory on a computing device (110₁, 110₂, 110₃) and/or on at least one server (870).

8. The method as claimed in any preceding claim, further comprising:
receiving (S1140), at the container engine element (233), a container image manifest that defines each predefined modular image file to be included within the executable image file (600, 700).

9. The method as claimed in claim 8, further comprising:
receiving (S1140) the container image manifest from a proxy (880) that is configured to communicate with the container engine element (233) and the container image registry (890).

10. The method as claimed in claim 8 or 9, further comprising:
responsive to receiving the container image manifest, via the container engine element (233), assembling (S1150) the executable image file (600, 700).

11. The method as claimed in any preceding claim, further comprising:
at the container engine element (233), receiving (S1145) each predefined modular image file needed to assemble the executable image file (600, 700) from a container image registry (890); and
assembling (S1150) the executable image file (600, 700).

12. A computing device (110₁, 110₂, 110₃) comprising one or more processors (112) configured to execute executable software, wherein the executable software, when executed, is configured to:
assemble an executable image file (600, 700), for execution as a software container element, from a plurality of predefined modular image files (705), each predefined modular image file comprising at least one layer defining executable instructions.

13. A computer-implemented method for assembling an executable image file for
execution as a software container element, comprising the steps of:
receiving (S1125) a request for an executable image file (600, 700) from a container engine element (233) that is configured to execute executable image files; and
responsive to determining that each of a plurality of predefined modular image files (705) usable to assemble the executable image file (600, 700) is accessible in memory, providing (S1140) a container image manifest, that defines each predefined modular image file to be included within the executable image file (600, 700), to the container engine element (233) for assembly of the executable image file (600, 700).

14. A computing device (130) comprising one or more processors (132) configured to execute executable software, wherein the executable software, when executed, is configured to:
receive a request for an executable image file (600, 700) from a container engine element (233) that is configured to execute executable image files; and
responsive to determining that each of a plurality of predefined modular image files (705) usable to assemble the executable image file (600, 700) is accessible in memory, provide a container image manifest, that defines each predefined modular image file to be included within the executable image file (600, 700), to the container engine element (233) for assembly of the executable image file (600, 700).

15. A computer program comprising instructions which, when executed by a computing device, cause the computing device to carry out the steps of the method defined by any of claims 1 to 11 or claim 13.
